# DEMANDE DE BREVET EUROPEEN

(11) **EP 2 960 119 A1**
(43) Date de publication de la demande: **30.12.2015**
(21) Numéro de dépôt: 14173758.5
(22) Date de dépôt: 24.06.2014
(51) Int. Cl.: B60R 25/20, B60R 25/24, G08B 23/00, G07C 9/00, B60R 25/045, H04L 9/08, H04L 9/32, G07C 5/00, B60R 25/30

(54) **Véhicule comprenant des équipements munis d'éléments sécurisés**

(71) Demandeur: Gemalto SA, 92190 Meudon (FR)
(72) Inventeur: Halle, David, 92190 Meudon (FR); Arnaud, Jean-François, 92190 Meudon (FR); Dao, Fréderic, 92190 Meudon (FR); Duprez, Jérôme, 92190 Meudon (FR); Stankowski, Stephan, 92190 Meudon (FR); Gillet, Thierry, 92190 Meudon (FR)
(74) Mandataire: Cour, Pierre

(57) **Abrégé**

La présente invention concerne un véhicule V comprenant une pluralité d'équipements CE. Le véhicule comprend un premier élément sécurisé SE1 et un deuxième élément sécurisé SE2. L'un des premier et deuxième éléments sécurisés SE1, SE2 est solidaire dudit véhicule V, l'autre étant intégré dans un équipement CE. Le premier élément sécurisé SE1 comprend une première clef K1. Le deuxième élément sécurisé SE2 comprend une deuxième clef et est adapté pour :
- établir une première liaison de communication L1 avec un serveur distant SERV ;
- effectuer une authentification mutuelle avec ledit serveur distant SERV ; et
- si ladite authentification mutuelle est établie, recevoir une troisième clef K1 envoyée par ledit serveur distant SERV pour appairer ledit premier élément sécurisé SE1 avec ledit deuxième élément sécurisé SE2 via ladite première liaison de communication L1.

## Description

### DOMAINE TECHNIQUE DE L'INVENTION

La présente invention concerne un véhicule comprenant une pluralité d'équipements, et un procédé associé.

Elle trouve une application particulière mais non limitative dans le domaine des véhicules automobiles.

### ARRIÈRE-PLAN TECHNOLOGIQUE DE L'INVENTION

Selon un état de la technique connu de l'homme du métier, les véhicules automobiles comprennent des équipements tels qu'un calculateur d'injection ou un compteur kilométrique qui comprennent des données électroniques sensibles telles que respectivement des données configurant la puissance dudit véhicule automobile ou indiquant le kilométrage dudit véhicule automobile. Par ailleurs certains véhicules automobiles, notamment les véhicules électriques, utilisent un équipement tel qu'une batterie électrique rechargeable.

Un problème de cet état de la technique réside dans le fait qu'un tiers peut utiliser ces équipements de façon frauduleuse, que ce soit :
- en modifiant les données sensibles de ces équipements par exemple pour augmenter la puissance du véhicule automobile sans y être autorisé ou pour modifier le kilométrage du véhicule automobile ; ou
- en dérobant ces équipements, tel que la batterie électrique, pour les utiliser dans un autre véhicule sans y être autorisé.

Dans ce contexte, la présente invention vise à résoudre les inconvénients précédemment mentionné.

### DESCRIPTION GENERALE DE L'INVENTION

A cette fin l'invention propose un véhicule comprenant une pluralité d'équipements, selon lequel ledit véhicule comprend un premier élément sécurisé et un deuxième élément sécurisé, l'un des premier et deuxième éléments sécurisés étant solidaire dudit véhicule et l'autre des premier et deuxième éléments sécurisés étant intégré dans un équipement, et selon lequel :
- le premier élément sécurisé comprend une première clef;
- le deuxième élément sécurisé comprend une deuxième clef et est adapté pour :
   - établir une première liaison de communication avec un serveur distant ;
   - effectuer une authentification mutuelle avec ledit serveur distant ; et
   - si ladite authentification mutuelle est établie, recevoir ladite première clef envoyée par ledit serveur distant pour appairer ledit premier élément sécurisé avec ledit deuxième élément sécurisé via ladite première liaison de communication.

Ainsi, comme on va le voir en détail ci-après, le fait d'appairer via un tiers de confiance (le serveur distant) un élément sécurisé d'un véhicule donné avec un élément sécurisé d'un équipement avant toute utilisation de l'équipement dans ledit véhicule, va permettre d'empêcher une utilisation frauduleuse de cet équipement. Ainsi, on réduit le risque de vol de cet équipement ou encore par la modification de ses données. En effet, pour fonctionner avec le véhicule donné, ledit équipement va devoir être apparié avec le véhicule qui lui a été via le serveur distant. Un équipement volé ne pourra donc pas être utilisé sur un véhicule autre que celui auquel il avait été destiné. Par ailleurs, avant l'appairage, comme l'équipement demande une authentification à tout serveur qui veut se connecter, cela empêchera un tiers de modifier les données dudit équipement sans autorisation avec un serveur qui ne partage pas la bonne clef de l'élément sécurisé dudit équipement.

Selon des modes de réalisation non limitatifs, le véhicule peut comporter en outre une ou plusieurs caractéristiques supplémentaires parmi les suivantes:
- la première clef et la troisième clef sont une seule et même clef secrète
- ledit premier élément sécurisé est solidaire du véhicule et ledit deuxième élément sécurisé est intégré dans un équipement.
- ledit premier élément sécurisé est intégré dans un équipement et ledit deuxième élément sécurisé est solidaire du véhicule.
- ladite authentification mutuelle est réalisée au moyen d'un challenge-réponse basé sur la deuxième clef.
- ledit véhicule comprend une pluralité d'équipements comprenant chacun un élément sécurisé.
- un équipement comprenant un élément sécurisé est une batterie du véhicule.
- un élément sécurisé est une carte à puce.
- la première liaison de communication s'effectue au moyen d'un protocole de communication sécurisé https.
- ledit deuxième élément sécurisé est en outre adapté pour :
   - établir une deuxième liaison de communication avec ledit premier élément sécurisé ;
   - effectuer une authentification mutuelle avec ledit premier élément sécurisé ; et
   - si ladite authentification mutuelle est établie, autoriser ledit équipement à fonctionner avec ledit véhicule via ladite deuxième liaison de communication.
- ladite authentification mutuelle est réalisée au moyen d'un challenge-réponse basé sur ladite première clef.
- la deuxième liaison de communication s'effectue au moyen d'une connexion filaire ou sans fil.

Il est également proposé un serveur adapté pour appairer un premier élément sécurisé d'un véhicule comprenant une pluralité d'équipements avec un deuxième élément sécurisé du véhicule, l'un des premier et deuxième éléments sécurisés étant solidaire dudit véhicule et l'autre des premier et deuxième éléments sécurisés étant intégré dans un équipement dudit véhicule, le premier élément sécurisé comprenant une première clef et le deuxième élément sécurisé comprenant une deuxième clef, selon lequel ledit serveur comprend une quatrième clef et est adapté pour :
- établir une première liaison de communication avec ledit deuxième élément sécurisé ;
- effectuer une authentification mutuelle avec ledit deuxième élément sécurisé ; et
- si ladite authentification mutuelle est établie, envoyer audit deuxième élément sécurisé une troisième clef pour appairer ledit premier élément sécurisé avec ledit deuxième élément sécurisé via ladite première liaison de communication.

Selon un mode de réalisation non limitatif, l'établissement de la première liaison de communication est déclenché par un ordre reçu d'un dispositif portable. Egalement, la première clef et la troisième clef peuvent être une même première clef secrète alors que la deuxième clef et la quatrième clef peuvent être une même deuxième clef secrète.

Il est également proposé un procédé d'appairage d'un premier élément sécurisé d'un véhicule comprenant une pluralité d'équipements avec un deuxième élément sécurisé du véhicule, l'un des premier et deuxième éléments sécurisés étant solidaire dudit véhicule et l'autre des premier et deuxième éléments sécurisés étant intégré dans un équipement dudit véhicule, le premier élément sécurisé comprenant une première clef et le deuxième élément sécurisé comprenant une deuxième clef, selon lequel le procédé comprend :
- l'établissement d'une première liaison de communication entre un serveur distant et ledit deuxième élément sécurisé ;
- la réalisation d'une authentification mutuelle entre ledit deuxième élément sécurisé et ledit serveur distant ; et
- si ladite authentification mutuelle est établie, l'envoi d'une troisième clef à partir dudit serveur distant et la réception de ladite troisième clef par ledit deuxième élément sécurisé, pour appairer ledit premier élément sécurisé avec ledit deuxième élément sécurisé via ladite première liaison de communication.

### BREVE DESCRIPTION DES FIGURES

L'invention et ses différentes applications seront mieux comprises à la lecture de la description qui suit et à l'examen des figures qui l'accompagnent.
- la figure 1a représente un schéma d'un véhicule selon un premier mode de réalisation non limitatif de l'invention ;
- la figure 1b représente un schéma d'un véhicule selon un deuxième mode de réalisation non limitatif de l'invention ;
- la figure 2 représente un élément sécurisé intégré dans un équipement du véhicule de la figure 1a, ledit élément sécurisé étant adapté pour se connecter avec un serveur distant et un élément sécurisé solidaire dudit véhicule selon un mode de réalisation non limitatif ;
- la figure 3 est un schéma d'un procédé d'appairage entre deux éléments sécurisés du véhicule de la figure 1a selon un mode de réalisation non limitatif ; et
- la figure 4 est un diagramme de séquences explicatif du procédé d'appairage de la figure 3.

### DESCRIPTION DE MODES DE REALISATION DE L'INVENTION

Les éléments identiques, par structure ou par fonction, apparaissant sur différentes figures conservent, sauf précision contraire, les mêmes références.

Par véhicule, on entend tout véhicule qu'il soit terrestre tel qu'un véhicule automobile (voiture, moto etc.), aérien tel qu'un avion, marin tel qu'un navire ou amphibien tel qu'un sous-marin.

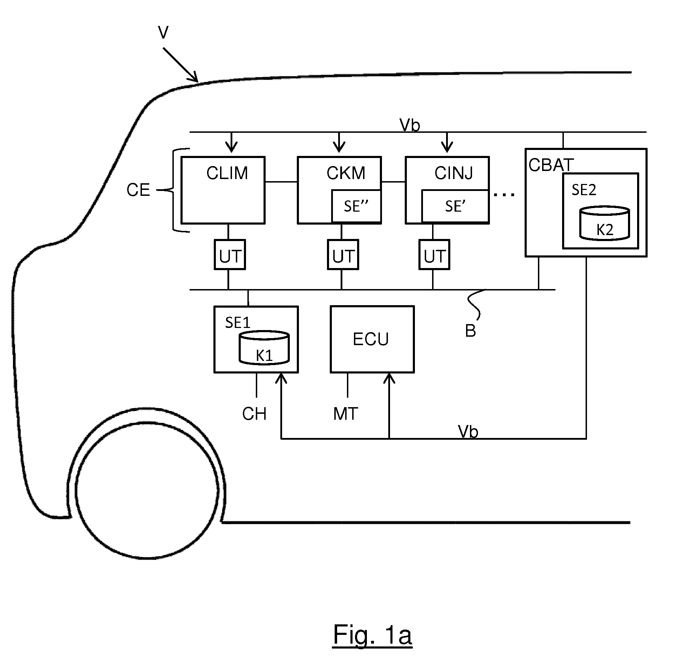

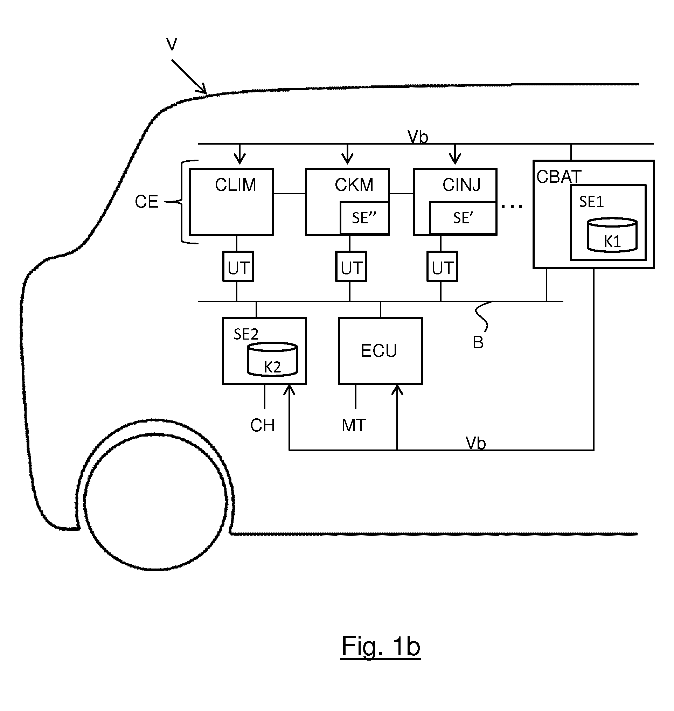

Dans la suite de la description, un véhicule automobile est pris comme exemple non limitatif. Le véhicule automobile V est illustré à la figure 1a et à la figure 1 b.

Le véhicule automobile V comporte :
- une pluralité d'équipements CE tels que dans des exemples non limitatifs un calculateur d'injection CINJ, un compteur kilométrique CKM, un climatiseur CLIM et une batterie CBAT. La batterie CBAT permet d'alimenter les autres équipements CE et l'unité de contrôle moteur ECU en fournissant une tension Vb de 12V par exemple ;
- une unité de contrôle moteur ECU adaptée pour gérer le moteur MT du véhicule V ;
- des unités de contrôle électroniques UT pour gérer les différents équipements CE du véhicule V ;
- un bus de communication B adapté pour permettre la communication entre l'unité de contrôle moteur ECU, les différentes unités de contrôle entre elles. Dans un exemple non limitatif, le bus de communication est un bus CAN (« Controller Area network ») ou LIN (« Local Interconnect Network ») ;

Le véhicule V comporte en outre :
- un premier élément sécurisé SE1 et un deuxième élément sécurisé SE2, l'un des premier et deuxième élément sécurisé SE1, SE2 étant solidaire du véhicule V, et l'autre des premier et deuxième élément sécurisé SE1, SE2 étant intégré dans un équipement du véhicule V.

Le premier élément sécurisé SE1 comprend une première clef secrète K1; et le deuxième élément sécurisé SE2 comprend une deuxième clef secrète K2.

Dans l'exemple de la figure 1a, dans un premier mode de réalisation non limitatif, ledit premier élément sécurisé SE1 est solidaire du véhicule V et ledit deuxième élément sécurisé SE2 est intégré dans un équipement CE dudit véhicule V. Dans l'exemple illustré, le véhicule V comprend une pluralité de deuxièmes éléments sécurisés SE2 : un deuxième élément sécurisé SE2 fait partie de la batterie CBAT, un deuxième élément sécurisé SE2' fait partie du calculateur d'injection CINJ et un deuxième élément sécurisé SE2" fait partie du compteur kilométrique CKM.

Dans l'exemple de la figure 1b, dans un deuxième mode de réalisation non limitatif, on a au contraire ledit premier élément sécurisé SE1 qui est intégré dans un équipement CE et ledit deuxième élément sécurisé SE2 qui est solidaire du véhicule V. Dans l'exemple illustré, un premier élément sécurisé SE1 fait partie de la batterie CBAT.

Par solidaire, on entend un élément sécurisé SE qui est :
- fixé au véhicule de manière à ce qu'en cas d'extraction frauduleuse dudit élément SE, ce dernier est détérioré et ne fonctionne plus (par exemple les données en mémoire s'effacent) ; et
- monté dans le véhicule V dans un endroit difficile d'accès. Ainsi, dans un exemple non limitatif, ledit élément de sécurité SE est monté sur le châssis CH du véhicule V.

Dans la suite de la description, on prend comme exemple non limitatif, le premier mode de réalisation de la figure 1a dans lequel le premier élément sécurisé SE1 est solidaire du véhicule V et le deuxième élément sécurisé SE2 fait partie d'un équipement CE qui est la batterie CBAT.

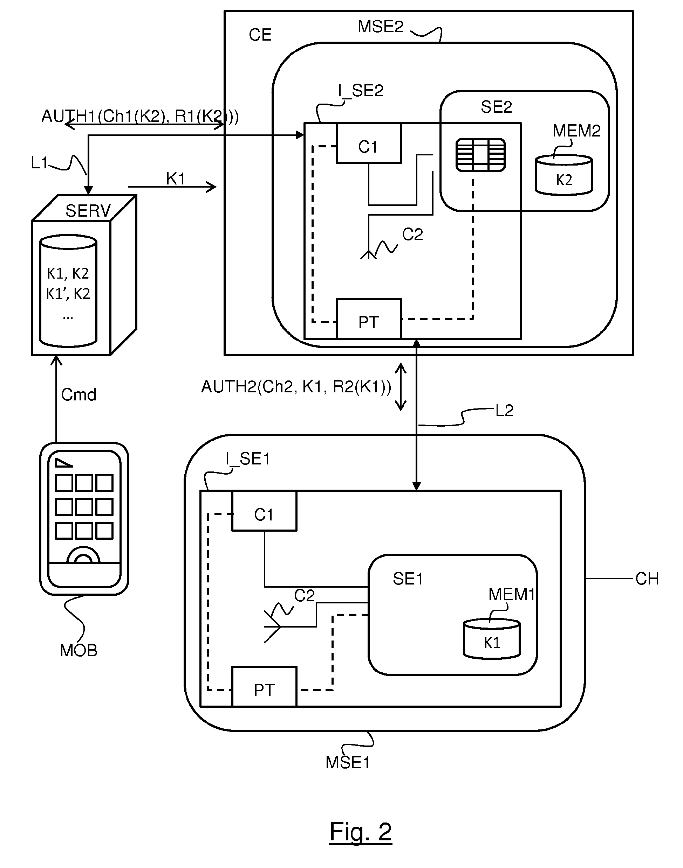

L'exemple non limitatif de la figure 2 illustre un équipement CE (la batterie CBAT) qui comprend le deuxième élément sécurisé SE2.
Différents modes de réalisation non limitatifs d'un élément sécurisé SE (que ce soit le premier élément sécurisé SE1 ou un deuxième élément sécurisé SE2, SE2', SE2") sont décrits ci-après.

Dans un premier mode de réalisation non limitatif illustré sur la figure 2, un élément sécurisé SE (ici l'élément SE2 de la batterie CBAT) est une carte à puce. Ladite carte à puce comprend notamment de manière connue un circuit intégré et une mémoire non volatile MEM2. Cette carte à puce est couplée avec une interface de connexion I_SE2 via des connecteurs soudés (ou pattes) (appelés « pins » en anglais »). La carte à puce SE2 et l'interface de connexion I_SE2 forment un module de sécurité MSE2.

Ladite interface de connexion I_SE2 comporte :
- un émetteur-récepteur C1 connecté au bus de communication B ;
- une interface de communication sans fil C2. Dans un exemple non limitatif, cette interface C2 supporte les protocoles de communication sans fil NFCTM (« Near Field Communication »), Bluetooth®, WifiTM etc.
- un adaptateur de puissance PT connecté à la batterie CBAT via le réseau de bord du véhicule V et qui permet de convertir la tension de la batterie CBAT en une tension plus faible pour alimenter la carte à puce.

Dans un deuxième mode de réalisation non limitatif illustré également sur la figure 2, un élément sécurisé SE (ici l'élément SE1 solidaire du véhicule V) est un microcontrôleur. Ce microcontrôleur comprend un circuit intégré. Il est couplé à une interface de connexion I_SE1 qui comporte les mêmes éléments C1, C2, PT que l'interface de connexion I_SE2. Le microcontrôleur SE1 et l'interface de connexion I_SE1 forment un module de sécurité MSE1.

Le deuxième élément sécurisé SE2 est adapté pour :
- établir une première liaison de communication L1 avec un serveur distant SERV ;
- effectuer une authentification mutuelle avec ledit serveur distant SERV, dite première authentification AUTH1 ; et
- si ladite authentification mutuelle est établie, recevoir ladite première clef secrète K1 envoyée par ledit serveur distant SERV pour appairer ledit premier élément sécurisé SE1 avec ledit deuxième élément sécurisé SE2 via la première liaison de communication L1 ; et
- sauvegarder en mémoire MEM2 ladite première clef secrète K1.

Par appairage d'un élément sécurisé avec un autre élément sécurisé, on entend le fait de rendre dépendant un élément sécurisé d'un autre élément sécurisé de sorte qu'ils puissent communiquer entre eux parce qu'ils se reconnaissent l'un, l'autre, et qu'ils ne fonctionneront jamais l'un sans l'autre.

On notera que dans l'exemple illustré, le premier élément sécurisé SE1 est appairé à au moins un deuxième élément sécurisé, ici le SE2 de la batterie CBAT. De la même manière, on peut également l'appairer aux autres deuxièmes éléments sécurisés SE2', SE2" des autres équipements CINJ, CKM etc.

On notera que le deuxième élément sécurisé SE2 est adapté pour effectuer les fonctions décrites ci-dessus au cours d'une phase d'initialisation PH1.
Par phase d'initialisation PH1, on entend une phase dans laquelle on paramètre l'équipement CE avant son utilisation dans le véhicule automobile V et dans laquelle il y a une authentification mutuelle entre l'équipement CE et le serveur distant SERV. La phase PH1 comprend donc une phase de paramétrage et une phase d'authentification mutuelle.

On notera que dans l'exemple non limitatif de la batterie CBAT, le serveur distant SERV est un serveur appartenant par exemple à un loueur de batteries. Lorsqu'une batterie CBAT doit être installée dans un véhicule automobile, le loueur de batterie va appairer le deuxième élément sécurisé SE2 de la batterie CBAT avec le premier élément sécurisé SE1 d'un véhicule donné lors d'une phase d'initialisation du deuxième élément sécurisé SE2. L'appairage se fait ici en donnant la première clef secrète K1 du premier élément sécurisé SE1 du véhicule à ladite batterie CBAT. Ainsi, la batterie CBAT ne va fonctionner qu'avec ce véhicule identifié par son premier élément sécurisé SE1. On notera que l'appairage se fait ici avant l'installation de la batterie CBAT dans le véhicule ou lorsque la batterie est déjà installée dans le véhicule, mais en tout état de cause avant la toute première utilisation de la batterie CBAT dans le véhicule V.

La phase d'initialisation PH1 se répète à chaque fois que la batterie CBAT est réutilisée dans un nouveau véhicule V.

Les différentes fonctions (énumérées ci-dessus) du deuxième élément sécurisé SE2 sont décrites plus en détail ci-dessous.

Dans un mode de réalisation non limitatif, la première liaison de communication L1 s'effectue au moyen d'un protocole de communication sécurisé https afin de transmettre notamment la première clef secrète K1 de manière sécurisée. La première liaison de communication L1 est filaire ou sans fil (dans des exemples non limitatifs WIFI^{™}, NFC^{™} etc.).

Lorsque la première liaison est filaire, le serveur distant SERV accède audit élément sécurisé SE2 via un ordinateur local qui se connecte directement sur la batterie CBATpar exemple.

Grâce à la première authentification mutuelle, la batterie CBAT s'assure qu'elle communique bien avec le bon serveur distant SERV. De même, le serveur distant SERV s'assure de communiquer avec une batterie CBAT non frauduleuse.

Dans un mode de réalisation non limitatif, la première authentification mutuelle est réalisée au moyen d'un challenge-réponse (appelée en anglais « challenge response authentification ») basé sur la deuxième clef secrète K2. Ainsi, dans un exemple non limitatif, lorsque le serveur distant s'authentifie au deuxième élément SE2, il envoie une réponse d'authentification R1 suite à une demande d'authentification demandée par le deuxième élément SE2, ladite demande comprenant un challenge Ch1 basé sur la deuxième clef secrète K2. La réponse d'authentification R1 du serveur SERV est valide si elle est elle-même basée sur la deuxième clef secrète K2, c'est-à-dire calculée à partir de la deuxième clef secrète K2. Cela signifie que la batterie CBAT et le serveur distant SERV partagent le même secret, à savoir ici la deuxième clef secrète K2.

L'authentification par challenge-réponse étant connue de l'homme du métier, elle n'est pas décrite plus en détail ici.

Ainsi, seuls les serveurs distants SERV qui partagent la même clef secrète K2 que la batterie CBAT pourront accéder à ladite batterie CBAT pour modifier ses données ou ajouter des informations dans sa mémoire MEM2, ici la première clef secrète K1. Un tiers qui vole ladite batterie CBAT ne pourra pas venir se connecter à ladite batterie pour modifier ses données (et notamment y implanter une première clef secrète frauduleuse) avec un dispositif frauduleux puisque son dispositif ne passera pas cette étape d'authentification. La batterie CBAT ne pourra donc pas être utilisée dans un véhicule V qui comporte une première clef secrète frauduleuse. Elle ne fonctionnera qu'avec les différents véhicules auxquels elle aura été destinée au cours de sa vie. Cela s'applique notamment dans le cas d'une batterie électrique rechargeable qui peut être montée sur différents véhicules. A cette fin, à chaque utilisation sur un véhicule différent, la batterie CBAT recevra une première clef secrète K1 différente correspondant à chacun des différents véhicules où elle est utilisée. Le loueur de batteries peut ainsi gérer différentes batteries pour un véhicule donné.

De la même manière, l'authentification de la batterie CBAT au serveur distant SERV permet audit serveur SERV de s'assurer qu'il transmet la première clef secrète K1 à une batterie CBAT non piratée. Ainsi, dans un exemple non limitatif, lorsque la batterie CBAT s'authentifie au serveur distant SERV via son deuxième élément SE2, elle envoie une réponse d'authentification R1 suite à une demande d'authentification demandée par le serveur distant, ladite demande comprenant un challenge Ch1 basé sur la deuxième clef secrète K2. La réponse d'authentification R1 de la batterie CBAT est valide si elle est elle-même basée sur la deuxième clef secrète K2, c'est-à-dire calculée à partir de la deuxième clef secrète K2.

Dans un mode de réalisation non limitatif, la mémoire MEM2 qui sauvegarde la première clef secrète K1 est une mémoire non volatile réinscriptible telle qu'une EEPROM (« Electrically Erasable Programmable Read-Only Memory »). Cette mémoire MEM2 comprend ainsi la première clef K1 et l'association de la première clef K1 avec la deuxième clef K2.

Côté serveur distant SERV, pour appairer un premier élément sécurisé SE1 du véhicule V avec un deuxième élément sécurisé SE2 du véhicule V, l'un des premier et deuxième éléments sécurisés SE1, SE2 étant solidaire dudit véhicule V et l'autre des premier et deuxième éléments sécurisés SE1, SE2 étant intégré dans un équipement CE dudit véhicule V (dans l'exemple illustré le premier élément sécurisé SE1 est solidaire du véhicule et le deuxième élément sécurisé SE2 fait partie de la batterie CBAT), le premier élément sécurisé SE1 comprenant une première clef secrète K1 et le deuxième élément sécurisé SE2 comprenant une deuxième clef secrète K2, le serveur distant SERV comprend la deuxième clef secrète K2 et est adapté pour :
- établir ladite première liaison de communication L1 avec ledit deuxième élément sécurisé SE2 ;
- effectuer une authentification mutuelle avec ledit deuxième élément sécurisé SE2 ; et
- si ladite authentification mutuelle est établie, envoyer audit deuxième élément sécurisé SE2 ladite première clef secrète K1 pour appairer ledit premier élément sécurisé SE1 avec ledit deuxième élément sécurisé SE2 via ladite première liaison de communication L1.

Ainsi, la deuxième clef K2 est ici une clef dite administrative qui permet au serveur distant SERV d'effectuer des opérations d'administration sur les différents équipements CE destinés à être montés dans un véhicule automobile V donné.

Dans un mode de réalisation non limitatif, l'établissement de la première liaison de communication L1 est déclenché par un ordre Cmd reçu d'un dispositif portable MOB. Le dispositif portable MOB peut ainsi déclencher l'appairage. Dans des exemples non limitatifs, le dispositif portable MOB est un téléphone mobile, une tablette tactile etc. Ainsi, un administrateur du serveur distant SERV peut donner à distance un ordre d'appairage audit serveur distant SERV.

Lorsque l'appairage a été effectué au cours da la phase d'initialisation PH1 du deuxième élément sécurisé SE2, ce dernier peut effectuer les fonctions suivantes.

Le deuxième élément sécurisé SE2 est ainsi en outre adapté pour :
- établir une deuxième liaison de communication L2 avec ledit premier élément sécurisé SE1 ;
- effectuer une authentification mutuelle avec ledit premier élément sécurisé SE1, dite deuxième authentification mutuelle AUTH2 ; et
- si ladite authentification mutuelle est établie, autoriser ledit équipement CE à fonctionner avec ledit véhicule V via ladite deuxième liaison de communication L2.

Ainsi, Le deuxième élément sécurisé SE2 est adapté pour effectuer ces fonctions au cours d'une phase d'utilisation PH2 dans le véhicule automobile V. Les différentes fonctions supplémentaires (énumérées ci-dessus) du deuxième élément sécurisé SE2 sont décrites plus en détail ci-dessous.

Dans un mode de réalisation non limitatif, la deuxième liaison de communication L2 s'effectue au moyen d'une connexion filaire (via l'émetteur-récepteur C1 connecté au bus B vu précédemment) ou sans fil (via l'interface de communication sans fil C2 vu précédemment) ou via un courant porteur sur la tension batterie Vb.

Grâce à la deuxième authentification mutuelle entre les deux éléments sécurisés SE1 et SE2, la batterie CBAT s'assure qu'elle communique bien avec le bon véhicule V. Ainsi, si la batterie CBAT est volée, elle ne peut être utilisée avec un autre véhicule V. De même, le véhicule V s'assure de communiquer avec une batterie CBAT non frauduleuse. Ainsi, si le véhicule est volé et qu'une batterie de remplacement est installée dans le véhicule, ce dernier ne pourra pas fonctionner avec la batterie de fonctionnement.

Dans un mode de réalisation non limitatif, la deuxième authentification mutuelle est réalisée au moyen d'un challenge-réponse (appelée en anglais « challenge response authentification ») basé sur la première clef secrète K1.

Ainsi, dans un exemple non limitatif, lorsque le véhicule V via le premier élément sécurisé SE1 s'authentifie au deuxième élément SE2, il envoie une réponse d'authentification R2 suite à une demande d'authentification demandée par le deuxième élément SE2, ladite demande comprenant un challenge Ch1 basé sur la première clef secrète K1.

La réponse d'authentification R2 du véhicule V est valide si elle est elle-même basée sur la première clef secrète K1, c'est-à-dire calculée à partir de la première clef secrète K1. Cela signifie que la batterie CBAT et le véhicule V partagent le même secret, à savoir ici la première clef secrète K1.

De la même manière, dans un exemple non limitatif, lorsque le deuxième élément SE2 s'authentifie au premier élément SE1, il envoie une réponse d'authentification R2 suite à une demande d'authentification demandée par le premier élément sécurisé SE1, ladite demande comprenant un challenge Ch1 basé sur la première clef secrète K1. La réponse d'authentification R2 de la batterie CBAT est valide si elle est elle-même basée sur la première clef secrète K1, c'est-à-dire calculée à partir de la première clef secrète K1.

Ainsi, seuls les véhicules V qui partagent la même clef secrète K1 que la batterie CBAT (à savoir qui sont associés avec ladite batterie CBAT via l'appairage de clefs secrètes) pourront fonctionner avec ladite batterie CBAT. Dans l'exemple pris, suite à une authentification mutuelle, la batterie CBAT délivre la tension sur le réseau de bord du véhicule V pour notamment alimenter les différents équipements CE. Dans le cas contraire, le réseau de bord n'est pas alimenté et le véhicule V ne peut démarrer. La batterie est inutilisable. On notera que la première clef secrète K1 associée au véhicule V est enregistrée dans une mémoire MEM1, par exemple une EEPROM, du premier élément sécurisé SE1 solidaire dudit véhicule V.

Dans l'exemple du calculateur d'injection CINJ, si les réponses d'authentification R2 sont valides, le calculateur d'injection CINJ va fournir au véhicule V les données correspondant à la puissance du véhicule V.

Ainsi, par « autoriser un équipement CE à fonctionner avec le véhicule V », on entend le fait que ledit équipement CE délivre du courant/tension ou délivre des données audit véhicule V.

Dans un exemple non limitatif, la phase d'utilisation PH2 peut comprendre le démarrage du véhicule V. Dans ce cas, l'authentification mutuelle AUTH2 peut être demandée au démarrage du véhicule V.

Dans un autre exemple non limitatif, la phase d'utilisation PH2 peut comprendre la récupération d'informations en cas de réparation d'un équipement CE tel que le calculateur d'injection CINJ par exemple. Dans ce cas, l'authentification mutuelle AUTH2 peut être demandée lorsqu'un ordinateur se connecte à l'équipement CE pour récupérer ces informations. On notera que l'ordinateur devra présenter la clef K1 pour s'authentifier. Cela signifie qu'un appairage aura été fait entre le serveur distant SERV et ledit ordinateur au préalable. Dans le cas contraire, l'équipement CE refusera de communiquer avec cet ordinateur inconnu.

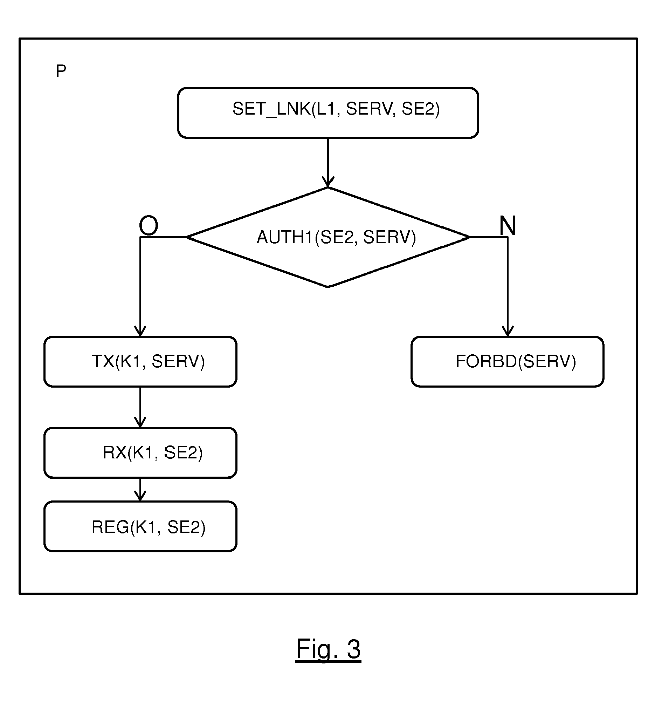

Ainsi, le deuxième élément sécurisé SE2 et le serveur distant SERV permettent de mettre en oeuvre le procédé d'appairage P illustré sur la figure 3. Ledit procédé d'appairage P d'un premier élément sécurisé SE1 d'un véhicule V comprenant une pluralité d'équipements CE avec un deuxième élément sécurisé SE2 du véhicule, l'un des premier et deuxième éléments sécurisés SE1, SE2 étant solidaire dudit véhicule V et l'autre des premier et deuxième éléments sécurisés SE1, SE2 étant intégré dans un équipement CE dudit véhicule V, le premier élément sécurisé SE1 comprenant une première clef secrète K1 et le deuxième élément sécurisé SE2 comprenant une deuxième clef secrète K2, comprend :
- l'établissement d'une première liaison de communication L1 entre un serveur distant SERV et ledit deuxième élément sécurisé SE2 (illustrée SET_LNK(L1, SERV, SE2)) ;
- la réalisation d'une authentification mutuelle entre ledit deuxième élément sécurisé SE2 et ledit serveur distant SERV (illustrée AUTH1(SE2, SERV)) ; et
- si ladite authentification mutuelle est établie (branche « O » illustrée), l'envoi de ladite première clef secrète K1 à partir dudit serveur distant SERV (illustrée TX(K1, SERV)) et la réception de ladite première clef secrète K1 par ledit deuxième élément sécurisé SE2 (illustrée RX(K1, SE2)), pour appairer ledit premier élément sécurisé SE1 avec ledit deuxième élément sécurisé SE2 via ladite première liaison de communication L1 ;
- la sauvegarde de la première clef secrète K1 en mémoire dans le deuxième élément sécurisé SE2 (étape illustrée REG(K1, SE2)) ; et
- si l'authentification mutuelle n'a pas réussie ((branche « N » illustrée), l'interdiction par ledit deuxième élément sécurisé SE2 audit serveur SERV d'accéder à ses données (étape FORBD(SERV)).

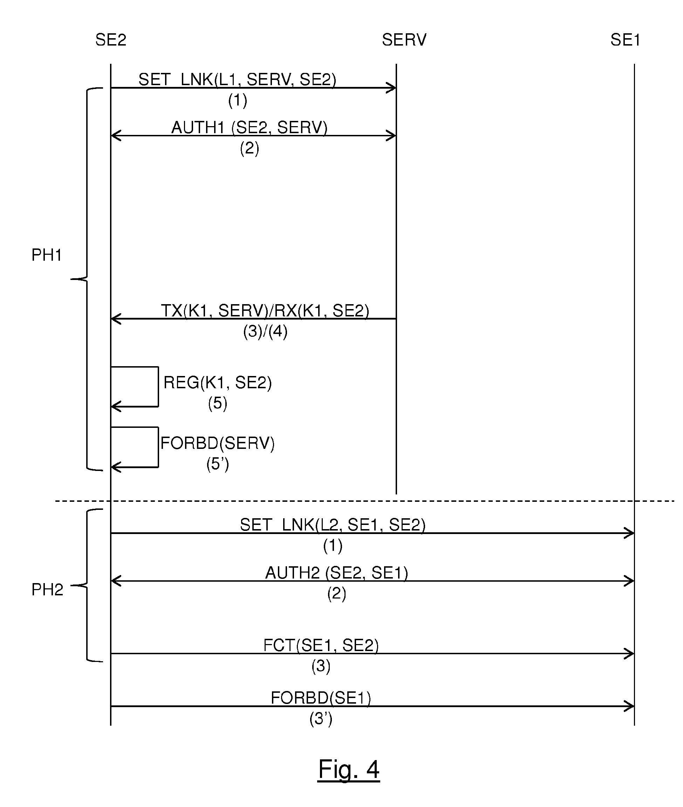

La figure 4 illustre l'enchaînement des différentes étapes au cours de la phase d'initialisation PH1.

Comme on peut le voir sur la figure, après l'établissement de la première liaison de communication L1 entre le deuxième élément sécurisé SE2 et le serveur SERV (étape 1 illustrée SET_LNK(L1, SERV, SE2)), le deuxième élément sécurisé SE2 et le serveur SERV s'authentifient mutuellement (étape 2 illustrée AUTH1 (SE2, SERV)).

Si l'authentification mutuelle est établie, le serveur SERV est autorisé à envoyer des données au deuxième élément sécurisé SE2. Il envoie donc la première clef secrète K1 du véhicule V auquel est destinée la batterie CBAT (étape 3 et 4 illustrées TX(K1, SERV)/RX(K1, SE2)). Cette dernière enregistre ladite clef K1 dans sa mémoire MEM2 (étape 5 illustrée REG(K1, SE2)). Les deux éléments sécurisé SE1, SE2 sont appairés. Le véhicule automobile V est associé à la batterie CBAT qui ne pourra fonctionner qu'avec ce véhicule V.

Si l'authentification mutuelle n'a pas réussie, le deuxième élément SE2 interdit l'accès au serveur SERV (étape 5' illustrée FORBD(SERV)).

La figure 4 illustre en outre les étapes au cours de la phase d'utilisation PH2 du deuxième élément sécurisé SE2.

Comme on peut le voir sur la figure, après l'établissement de la deuxième liaison de communication L2 entre le deuxième élément sécurisé SE2 et le premier élément sécurisé SE1 (étape 1 illustrée SET_LNK(L2, SE1, SE2)), le deuxième élément sécurisé SE2 et le premier élément sécurisé SE1 s'authentifient mutuellement (étape 2 illustrée AUTH2(SE2, SE1)). Par exemple lors du démarrage du véhicule V.

Si l'authentification mutuelle est établie, le véhicule V (auquel est rattaché le premier élément sécurisé SE1) est autorisé à fonctionner avec l'équipement CE, ici la batterie CBAT (qui comprend le deuxième élément sécurisé SE2) (étape 3 illustrée FCT(SE1, SE2). La batterie CBAT (qui comprend le deuxième élément sécurisé SE2) a identifié le véhicule automobile V et va donc pouvoir fonctionner avec lui. En particulier elle peut fournir en tension le réseau de bord dudit véhicule automobile V.

Si l'authentification mutuelle n'a pas réussie, le véhicule V n'est pas autorisé à fonctionner avec la batterie CBAT (étape 3' illustrée FORBD(SE1)).

Bien entendu la description de l'invention n'est pas limitée aux modes de réalisation et aux exemples décrits ci-dessus.

Ainsi, dans le cas d'un deuxième élément sécurisé SE2' faisant partie du calculateur d'injection CINJ, ce dernier ne pourra fonctionner avec un véhicule donné V que si le deuxième élément sécurisé SE2' a été appairé avec le premier élément sécurisé SE1 du véhicule V, et ce par un serveur distant SERV autorisé à le faire. Ainsi, un tiers fraudeur qui aura volé le véhicule ne pourra pas venir se connecter avec un appareil frauduleux sur le calculateur d'injection pour augmenter la puissance dudit véhicule V par exemple, puisqu'il n'aura pas connaissance du secret partagé entre ledit calculateur d'injection CINJ et le serveur autorisé SERV, à savoir ici la deuxième clef secrète K2.

Ainsi, dans le cas où le deuxième élément sécurisé SE2 est solidaire du véhicule V et le premier élément sécurisé SE1 est intégré dans la batterie CBAT, dans ce cas, la clef administrative est la deuxième clef secrète K2 et lors de l'appairage entre les deux éléments sécurisé SE1, SE2, le serveur distant SERV donne la première clef secrète K1 de la batterie CBAT au véhicule V. Ce dernier sauvegardera ainsi en mémoire le secret K1 de la batterie CBAT. Dans ce cas, le serveur distant SERV est administré par le constructeur du véhicule V par exemple.

Dans un autre mode de réalisation non limitatif, un élément sécurisé SE peut également comprendre une carte à puce dans laquelle il n'y a pas de gestion des interfaces de communication C1 et C2. Dans ce cas le module de sécurité comprenant une telle carte à puce comprend un module de gestion de communication supplémentaire pour gérer lesdites interfaces C1 et C2 et communiquer avec ladite carte à puce.

Dans un mode de réalisation non limitatif, on peut prévoir de gérer le démarrage du véhicule V en fonction d'autres équipements CE (comportant donc un élément sécurisé SE) en sus de la batterie CBAT ; par exemple en fonction d'équipements de sécurité tels que le dispositif de détection de ceintures attachées, le dispositif de fermeture des portières etc. ou encore par exemple en fonction d'équipements de gestion tels qu'un dispositif de carte de crédit pour la location de voitures. Dans ce dernier cas, le véhicule ne démarrera que si la carte de crédit comporte assez d'unités de location.

Dans un mode de réalisation non limitatif, les authentifications mutuelles AUTH1 et AUTH2 peuvent être exécutées de façon périodique, même après le démarrage du véhicule V.

Ainsi, le mode d'authentification mutuelle décrit précédemment est basé sur une authentification mutuelle à clef secrète symétrique. Dans un autre mode de réalisation non limitatif, l'authentification mutuelle est basée sur une authentification de type PKI (« Public Key Infrastructure ») qui utilise une clef publique et une clef secrète. Dans le cas d'une PKI, le serveur ne donne que la clef publique et la clef secrète est uniquement présente dans le dispositif. Egalement la deuxième clef secrète K2 peut être remplacée par une authentification de type PKI le serveur détenant soit la clef secrète K2 soit la clef publique correspondant à K2.

Bien entendu la description de l'invention n'est pas limitée aux applications décrites ci-dessus.

Ainsi, l'invention peut s'appliquer également à un bâtiment H (habitats privés ou publics tels qu'une maison, un immeuble d'habitation, un immeuble de bureaux etc.). En effet, on peut prévoir d'avoir un bâtiment H comprenant une pluralité d'équipements CE, selon lequel ledit bâtiment H comprend un premier élément sécurisé SE1 et un deuxième élément sécurisé SE2, l'un des premier et deuxième éléments sécurisés SE1, SE2 étant solidaire dudit bâtiment H et l'autre des premier et deuxième éléments sécurisés SE1, SE2 étant intégré dans un équipement CE, et selon lequel :
- le premier élément sécurisé SE1 comprend une première clef K1 ;
- le deuxième élément sécurisé SE2 comprend une deuxième clef K2 et est adapté pour :
   - établir une première liaison de communication L1 avec un serveur distant SERV ;
   - effectuer une authentification mutuelle avec ledit serveur distant SERV (dite première authentification mutuelle AUTH1) ; et
   - si ladite authentification mutuelle est établie, recevoir une troisième clef (K1 ou la clef publique correspondant à K1) envoyée par ledit serveur distant SERV pour appairer ledit premier élément sécurisé SE1 avec ledit deuxième élément sécurisé SE2 via ladite première liaison de communication L1 ; et
   - sauvegarder en mémoire MEM2 ladite troisième clef (K1 ou clef publique correspondant à K1).

On notera que le deuxième élément sécurisé SE2 est adapté pour effectuer les fonctions décrites ci-dessus au cours d'une phase d'initialisation PH1.

Dans des exemples non limitatifs, les équipements CE sont une télévision, un ordinateur, un boîtier internet, une imprimante etc. Ainsi, le bâtiment H peut comporter une pluralité d'équipements CE comprenant chacun un élément sécurisé SE. Ainsi, dans la figure 1, on remplace le véhicule V par un bâtiment H et on remplace les équipements CLIM, CINJ, CKM par un ordinateur CPC, un boîtier internet CBX, une imprimante CPR, et la batterie CBAT par une télévision CTV. Dans ce cas, bien entendu, l'unité de contrôle moteur ECU n'est plus présente, les unités de traitement UT sont intégrés dans les équipements CE, et un compteur électrique CPT est intégré dans la figure 1 qui est relié à tous les équipements CE via le réseau filaire électrique B du bâtiment H ou via un réseau sans fil (NFC^{™}, WIFI^{™} etc.).

La première liaison de communication L1 (ente l'élément sécurisé SE2 et le serveur distant SERV) est filaire ou sans fil (NFC^{™}, WIFI^{™} etc.) Dans le cas filaire, les fils électriques sont utilisés et le courant porteur est utilisé pour véhiculer les données telles que la clef secrète échangée.

Par solidaire, on entend un élément sécurisé SE qui est fixé au bâtiment H de manière à ce qu'en cas d'extraction frauduleuse dudit élément SE, ce dernier est détérioré et ne fonctionne plus (par exemple les données en mémoire s'effacent). Dans un exemple non limitatif, l'élément sécurisé SE solidaire du bâtiment H est fixé sur le compteur électrique CPT dudit bâtiment H.

De la même manière qu'avec le véhicule, soit ledit premier élément sécurisé SE1 est solidaire du bâtiment H et ledit deuxième élément sécurisé SE2 est intégré dans un équipement CE, soit ledit premier élément sécurisé SE1 est intégré dans un équipement CE et ledit deuxième élément sécurisé SE2 est solidaire du bâtiment H.

De la même manière qu'avec le véhicule, un élément sécurisé SE est une carte à puce ou un microcontrôleur dans des exemples non limitatifs. Ainsi, les modes de réalisation décrits précédemment pour la carte à puce ou le microcontrôleur et illustrés sur la figure 2 sont également applicables à l'application bâtiment H.

De la même manière qu'avec le véhicule, au cours d'une phase d'utilisation PH2, par exemple lors d'un démarrage, il y aura une authentification mutuelle entre un équipement CE et le bâtiment H. Ainsi, une télévision CTV ne pourra fonctionner que si elle est bien associée au bâtiment H dans lequel elle se trouve (via l'appairage effectué précédemment).

Ainsi, ledit deuxième élément sécurisé SE2 est en outre adapté pour :
- établir une deuxième liaison de communication L2 avec ledit premier élément sécurisé SE1 ;
- effectuer une authentification mutuelle avec ledit premier élément sécurisé SE1 (dite deuxième authentification mutuelle AUTH2) ; et
- si ladite authentification mutuelle est établie, autoriser ledit équipement CE à fonctionner avec ledit bâtiment H via ladite deuxième liaison de communication L2.

Ainsi, Le deuxième élément sécurisé SE2 est adapté pour effectuer ces fonctions au cours d'une phase d'utilisation PH2 dans le bâtiment H.

Ainsi, la description décrite dans le cadre d'un véhicule V s'applique de la même manière à un bâtiment H.
A savoir :
- un élément sécurisé SE est une carte à puce et les différents modes de réalisation de la figure 2 sont applicables ;
- ladite première authentification mutuelle AUTH1 est réalisée au moyen d'un challenge-réponse Ch1-R1 basé sur la deuxième clef secrète K2 ;
- la première liaison de communication L1 s'effectue au moyen d'un protocole de communication sécurisé https ;
- ladite deuxième authentification mutuelle AUTH2 est réalisée au moyen d'un challenge-réponse Ch2-R2 basé sur ladite première clef secrète K1 ;
- la deuxième liaison de communication L2 s'effectue au moyen d'une connexion filaire C1 ou sans fil C2 ou du courant porteur.

Le serveur distant SERV est dans un exemple non limitatif, un serveur administré par le gestionnaire du compteur électrique CPT du bâtiment H. Ainsi, le serveur distant SERV est adapté pour appairer un premier élément sécurisé SE1 d'un bâtiment H comprenant une pluralité d'équipements CE avec un deuxième élément sécurisé SE2 du bâtiment H, l'un des premier et deuxième éléments sécurisés SE1, SE2 étant solidaire dudit bâtiment H et l'autre des premier et deuxième éléments sécurisés SE1, SE2 étant intégré dans un équipement CE dudit bâtiment H, le premier élément sécurisé SE1 comprenant une première clef K1 et le deuxième élément sécurisé SE2 comprenant une deuxième clef K2, et ledit serveur SERV comprend une quatrième clef (K2 ou une clef secrète ou publique correspondant à K2) et est adapté pour :
- établir une première liaison de communication L1 avec ledit deuxième élément sécurisé SE2 ;
- effectuer une authentification mutuelle avec ledit deuxième élément sécurisé SE2 ; et
- si ladite authentification mutuelle est établie, envoyer audit deuxième élément sécurisé SE2 une troisième clef (K1 ou une clef publique correspondant à K1) pour appairer ledit premier élément sécurisé SE1 avec ledit deuxième élément sécurisé SE2 via ladite première liaison de communication L1.

De la même manière que pour le véhicule V, dans un mode de réalisation non limitatif, l'établissement de la première liaison de communication L1 est déclenché par un ordre Cmd reçu d'un dispositif portable MOB. Le dispositif portable MOB peut ainsi déclencher l'appairage.

Le procédé d'appairage P1 est donc effectué de la même manière que décrit précédemment. Ainsi, il est également proposé un procédé d'appairage P1 d'un premier élément sécurisé SE1 d'un bâtiment H comprenant une pluralité d'équipements CE avec un deuxième élément sécurisé SE2 du bâtiment H, l'un des premier et deuxième éléments sécurisés SE1, SE2 étant solidaire dudit bâtiment H et l'autre des premier et deuxième éléments sécurisés SE1, SE2 étant intégré dans un équipement CE dudit bâtiment H, le premier élément sécurisé SE1 comprenant une première clef K1 et le deuxième élément sécurisé SE2 comprenant une deuxième clef K2, selon lequel le procédé d'appairage P1 comprend :
- l'établissement d'une première liaison de communication L1 entre un serveur distant SERV et ledit deuxième élément sécurisé SE2 ;
- la réalisation d'une authentification mutuelle entre ledit deuxième élément sécurisé SE2 et ledit serveur distant SERV ; et
- si ladite authentification mutuelle est établie, l'envoi d'une troisième clef (K1 ou clef associée à K1) à partir dudit serveur distant SERV et la réception de ladite première clef secrète K1 par ledit deuxième élément sécurisé SE2, pour appairer ledit premier élément sécurisé SE1 avec ledit deuxième élément sécurisé SE2 via ladite première liaison de communication L1.

Les figures 3 et 4 s'appliquent donc également à l'application bâtiment H.

Ainsi, l'invention décrite présente notamment les avantages suivants :
- elle propose un appairage entre deux éléments sécurisés simple à mettre en oeuvre et peu coûteuse ;
- en effectuant l'appairage via un tiers de confiance (le serveur distant), elle permet d'éviter toute modification frauduleuse des données d'un élément sécurisé ;
- c'est une solution simple de prévention d'un vol d'un équipement par rapport à une solution qui consisterait à verrouiller physiquement ledit équipement (tel que la batterie). En effet, il suffit par exemple d'indiquer sur l'équipement qu'il est protégé pour prévenir un tiers qu'il est inutile de voler ledit équipement ;
- elle permet d'empêcher une utilisation frauduleuse dudit équipement dans un véhicule auquel il n'était pas dédié en permettant une identification d'un véhicule par un équipement (ou d'un équipement par un véhicule) via l'authentification au cours de la phase d'utilisation ; et
- elle permet de protéger également le véhicule du vol et du remplacement de l'un de ses équipements par un autre frauduleux, grâce à l'authentification mutuelle.

## Revendications

1. Véhicule (V) comprenant une pluralité d'équipements (CE), selon lequel ledit véhicule (V) comprend un premier élément sécurisé (SE1) et un deuxième élément sécurisé (SE2), l'un des premier et deuxième éléments sécurisés (SE1, SE2) étant solidaire dudit véhicule (V) et l'autre des premier et deuxième éléments sécurisés (SE1, SE2) étant intégré dans un équipement (CE), et selon lequel :
- le premier élément sécurisé (SE1) comprend une première clef (K1);
- le deuxième élément sécurisé (SE2) comprend une deuxième clef (K2) et est adapté pour :
- établir une première liaison de communication (L1) avec un serveur distant (SERV) ;
- effectuer une authentification mutuelle avec ledit serveur distant (SERV) ; et
- si ladite authentification mutuelle est établie, recevoir une troisième clef (K1) envoyée par ledit serveur distant (SERV) pour appairer ledit premier élément sécurisé (SE1) avec ledit deuxième élément sécurisé (SE2) via ladite première liaison de communication (L1).

2. Véhicule selon la revendication 1, dans lequel la première clef et la troisième clef correspondent à une même clef secrète.

3. Véhicule (V) selon la revendication 1, selon lequel ledit premier élément sécurisé (SE1) est solidaire du véhicule (V) et ledit deuxième élément sécurisé (SE2) est intégré dans un équipement (CE).

4. Véhicule (V) selon la revendication 1, selon lequel ledit premier élément sécurisé (SE1) est intégré dans un équipement (CE) et ledit deuxième élément sécurisé (SE2) est solidaire du véhicule (V).

5. Véhicule (V) selon l'une quelconque des revendications 1, selon lequel un équipement (CE) comprenant un élément sécurisé (SE) est une batterie (BAT) du véhicule.

6. Véhicule (V) selon l'une quelconque des revendications 1, selon lequel un élément sécurisé (SE) est une puce de carte à puce.

7. Véhicule (V) selon l'une quelconque des revendications 1, selon lequel la première liaison de communication (L1) s'effectue au moyen d'un protocole de communication sécurisé https.

8. Véhicule (V) selon l'une quelconque des revendications 1, selon lequel ledit deuxième élément sécurisé (SE2) est en outre adapté pour :
- établir une deuxième liaison de communication (L2) avec ledit premier élément sécurisé (SE1) ;
- effectuer une authentification mutuelle avec ledit premier élément sécurisé (SE1) ; et
- si ladite authentification mutuelle est établie, autoriser ledit équipement (CE) à fonctionner avec ledit véhicule (V) via ladite deuxième liaison de communication (L2).

9. Véhicule (V) selon la revendication précédente 8, selon lequel ladite authentification mutuelle est réalisée au moyen d'un challenge-réponse (Ch2-R2) basé sur ladite première clef (K1).

10. Véhicule (V) selon la revendication 8, selon lequel la deuxième liaison de communication (L2) s'effectue au moyen d'une connexion filaire (C1) ou sans fil (C2).

11. Serveur (SERV) adapté pour appairer un premier élément sécurisé (SE1) d'un véhicule (V) comprenant une pluralité d'équipements (CE) avec un deuxième élément sécurisé (SE2) du véhicule (V), l'un des premier et deuxième éléments sécurisés (SE1, SE2) étant solidaire dudit véhicule (V) et l'autre des premier et deuxième éléments sécurisés (SE1, SE2) étant intégré dans un équipement (CE) dudit véhicule (V), le premier élément sécurisé (SE1) comprenant une première clef (K1) et le deuxième élément sécurisé (SE2) comprenant une deuxième clef (K2), selon lequel ledit serveur (SERV) comprend une quatrième clef (K2) et est adapté pour :
- établir une première liaison de communication (L1) avec ledit deuxième élément sécurisé (SE2) ;
- effectuer une authentification mutuelle avec ledit deuxième élément sécurisé (SE2) ; et
- si ladite authentification mutuelle est établie, envoyer audit deuxième élément sécurisé (SE2) une troisième clef (K1) pour appairer ledit premier élément sécurisé (SE1) avec ledit deuxième élément sécurisé (SE2) via ladite première liaison de communication (L1).

12. Serveur selon la revendication 11, dans lequel la première clef et la troisième clef correspondent à une même première clef secrète.

13. Serveur selon la revendication 11, dans lequel la deuxième et la quatrième clef correspondent à une même deuxième clef secrète.

14. Serveur (SERV) selon la revendication 11, selon lequel l'établissement de la première liaison de communication (L1) est déclenché par un ordre (Cmd) reçu d'un dispositif portable (MOB).

15. Procédé d'appairage (P) d'un premier élément sécurisé (SE1) d'un véhicule (V) comprenant une pluralité d'équipements (CE) avec un deuxième élément sécurisé (SE2) du véhicule (V), l'un des premier et deuxième éléments sécurisés (SE1, SE2) étant solidaire dudit véhicule (V) et l'autre des premier et deuxième éléments sécurisés (SE1, SE2) étant intégré dans un équipement (CE) dudit véhicule (V), le premier élément sécurisé (SE1) comprenant une première clef (K1) et le deuxième élément sécurisé (SE2) comprenant une deuxième clef (K2), selon lequel le procédé (P) comprend :
- l'établissement d'une première liaison de communication (L1) entre un serveur distant (SERV) et ledit deuxième élément sécurisé (SE2) ;
- la réalisation d'une authentification mutuelle entre ledit deuxième élément sécurisé (SE2) et ledit serveur distant (SERV) ; et
- si ladite authentification mutuelle est établie, l'envoi d'une troisième clef (K1) à partir dudit serveur distant (SERV) et la réception de ladite troisième clef (K1) par ledit deuxième élément sécurisé (SE2), pour appairer ledit premier élément sécurisé (SE1) avec ledit deuxième élément sécurisé (SE2) via ladite première liaison de communication (L1).
